# EUROPEAN PATENT APPLICATION

(11) **EP 4 683 194 A1**
(43) Date of publication of application: **21.01.2026**
(21) Application number: 24189639.8
(22) Date of filing: 19.07.2024
(51) Int. Cl.: H02M 1/00, C25B 1/04, H02M 1/36, H02M 7/162, H02M 7/219, H02M 7/17, H02M 7/23

(54) **CONTROLLING A STARTING SEQUENCE AND A SHUTDOWN SEQUENCE FOR A POWER SUPPLY DEVICE OF AN ELECTROLYZING PLANT**

(71) Applicant: Siemens Energy Global GmbH & Co. KG, 81739 München (DE)
(72) Inventor: Craciun, Bogdan, 91052 Erlangen (DE); Langenberg, Nils, 90461 Nürnberg (DE); Bendig, Marvin, 90513 Zirndorf (DE); Schumann, Sven, 91452 Wilhermsdorf (DE); Loku, Fisnik, 90439 Nürnberg (DE)

(57) **Abstract**

The invention relates to a method of controlling a starting sequence for a power supply device (12), wherein the starting sequence comprises:
- activating operating of a thyristor-based converter (22),
- activating operating of a first transistor-based converter (24) by keeping a first DC switch (38) in an open status, operating in a capacitive reactive power modus,
- activating operating of a second transistor-based converter (26) by keeping a second DC switch (44) in an open status, wherein the second transistor-based converter (26) is operated in an inductive reactive power modus, wherein a second DC voltage is provided at the DC side (42) of the second transistor-based converter,
- comparing the increased DC system voltage with the second DC voltage, and, dependent on the comparison, switching the second DC switch in a closed status, stopping providing inductive reactive power and activating a power supply modus of the second transistor-based converter.

## Description

The invention relates according to a first aspect to a method of controlling a starting sequence for a power supply device configured to supply at least one electrolyzing device with electric power, in order to enable the electrolyzing device to establish an electrolyzing process in response to being supplied with the electric power such that the at least one electrolyzing device is subjected to an electrolyzing voltage and an electrolyzing current, wherein the power supply device has a thyristor-based converter having an AC side and a DC side, wherein the AC side of the thyristor-based converter is connected with a first AC voltage providing electric power of an AC power source, and wherein the DC side of the thyristor-based converter is connected with the at least one electrolyzing device, a first transistor-based converter operating in self-commutation and having an AC side and a DC side, wherein the AC side of the first transistor-based converter is connected with the first AC voltage, and the DC side of the first transistor-based converter is connected with the at least one electrolyzing device via a first DC switch, and a second transistor-based converter operating in self-commutation and having an AC side and a DC side, wherein the AC side of the second transistor-based converter is connected with a second AC voltage providing electric power of the AC power source, and the DC side of the second transistor-based converter is connected with the at least one electrolyzing device via a second DC switch. The invention further relates according to a second aspect to a method of controlling a shutdown sequence for a power supply device configured to supply at least one electrolyzing device with electric power, in order to enable shutting down operation of the at least one electrolyzing device from an on-status to an off-status, wherein, during the on-status, the at least one electrolyzing device is subjected to an electrolyzing voltage and an electrolyzing current provided by the power supply device, wherein the power supply device has a thyristor-based converter having an AC side and a DC side, wherein the AC side of the thyristor-based converter is connected with a first AC voltage providing electric power of an AC power source, and wherein the DC side of the thyristor-based converter is connected with the at least one electrolyzing device, a first transistor-based converter operating in self-commutation and having an AC side and a DC side, wherein the AC side of the first transistor-based converter is connected with the first AC voltage, and the DC side of the first transistor-based converter is connected with the at least one electrolyzing device via a first DC switch, and a second transistor-based converter operating in self-commutation and having an AC side and a DC side, wherein the AC side of the second transistor-based converter is connected with a second AC voltage providing electric power of the AC power source, and the DC side of the second transistor-based converter is connected with the at least one electrolyzing device via a second DC switch, wherein, in the on-status, at least the second DC switch is in a closed status and at least the second transistor-based converters operates in a power supply modus, in order to provide electric power to the at least one electrolyzing device, and the thyristor-based converter is deactivated. Also, the invention relates to power supply devices configured to supply at least one electrolyzing device with electric power, the power supply device having an output connector configured to be connected with the at least one electrolyzing device, a thyristor-based converter having an AC side and a DC side, wherein the AC side of the thyristor-based converter is configured to be connected with a first AC voltage providing electric power of an AC power source, and wherein the DC side of the thyristor-based converter is connected with the output connector, a first transistor-based converter operating in self-commutation and having an AC side and a DC side, wherein the AC side of the first transistor-based converter is configured to be connected with the first AC voltage, and the DC side of the first transistor-based converter is connected with the output connector via a first DC switch, a second transistor-based converter operating in self-commutation and having an AC side and a DC side, wherein the AC side of the second transistor-based converter is configured to be connected with a second AC voltage providing electric power of the AC power source, and the DC side of the second transistor-based converter is connected with the output connector via a second DC switch, and a control apparatus configured to control a starting sequence of the power supply device, in order to enable the electrolyzing device to establish an electrolyzing process in response to being supplied with the electric power such that the at least one electrolyzing device is subjected to an electrolyzing voltage and an electrolyzing current, wherein the control apparatus is further configured to provide at least a starting sequence or a shutdown sequence. Finally, the invention relates to an electrolyzing plant having at least one electrolyzing device, and a power supply device configured to be connected with an AC power source, wherein the power supply device has an output connector connected with the at least one electrolyzing device.

Methods for controlling a power supply device configured to supply at least one electrolyzing device with electric power, for instance, for producing hydrogen and oxygen by electrolyzing of water in an electrolyzing process, power supply devices configured to supply at least one electrolyzing device with electric power, as well as electrolyzing plants having least one electrolyzing device and a power supply device are well-known in the state of the art, which is why specific documents as a reference need not to be cited. The before-mentioned objects relate to providing an electrolyzing process which is, for instance, used for producing hydrogen and oxygen by electrolyzing of water. The following considerations can be also applied to such electrolyzing processes, respectively.

Electrolysis itself is provided by an electrolyzing device of the electrolyzing plant, which, in turn, comprises usually plural electrolyzing cells. A group of the electrolyzing cells of a specific electrolyzing device may be arranged to form an electrolyzing module. One or more electrolyzing modules may form the electrolyzing device.

The electrolyzing cells of a specific electrolyzing device or a specific electrolyzing module, respectively, may be electrically connected at least partially in series or in parallel. An electric connection of the electrolyzing device may be provided such that at least some, or perhaps all, of the electrolyzing cells are subjected to a respective portion of a DC voltage subjected to the electrolyzing device. The operation of generic electrolyzing cells as well as electrolyzing devices, for instance, for the use for electrolyzing of water, are well-known to those skilled in the art, such as, for instance, disclosed by DE 197 29 529 C1. The generic function of electrolysis, especially electrolysis of water, is also well-known to those skilled in the art which is why it is refrained from further detailed explanation in this specification.

An electrolyzing device has at least one single electrolyzing cell. However, common designs of electrolyzing devices teach that a specific electrolyzing device has a plurality of electrolyzing cells. During the electrolyzing process, when the electrolyzing device is subjected to the suited electrolyzing voltage which is usually a DC voltage, the electrolyzing device responds with an electrolyzing DC current flow. With regard to the electrolyzing of water, during the electrolyzing process, water is consumed, and hydrogen and oxygen are produced. A value of the DC voltage usually may depend on the number of electrolyzing cells being connected in series inside of the electrolyzing device. The electrolyzing DC current flow may depend on the number of electrolyzing cells being connected in parallel as well as the specific design of each of the electrolyzing cells.

Usually, operating of the electrolyzing plant requires a respective high power supply during the electrolyzing process. The conditions for establishing the electrolyzing process are not easy to control which is why it is usually an intention of operators to maintain specific processing conditions and to avoid large amendments of these conditions. Therefore, controlling of the electric power network should consider these requirements for supplying the electrolyzing plant with electric energy, on the one hand. On the other hand, network requirements of the electric power network need to be also considered, such as, for example, harmonics, power factor, low voltage condition, high voltage condition, and/or the like.

In this regard, it should be noted that the electrolyzing plant usually has a rectifying device providing an electrical coupling between the electric power network and the electrolyzing device. The electrolyzing device need to be supplied with DC voltage, whereas, usually, the electric power network provides AC voltage of an AC power source providing, especially, a three phase AC voltage. Therefore, the electrolyzing plant has at least one rectifying device which receives the AC voltage and, in response, provides the DC voltage. Moreover, the rectifying device may include one or more transformers, in order to transform the AC voltage before rectifying. Common power supply devices have at least a thyristor-based converter which serves to provide a DC system voltage which may be a polarization voltage of the at least one electrolyzing device. During the electrolyzing process, two or more transistor-based converter operating in self-commutation are included to provide power supply. Usually, the thyristor-based converter is deactivated during the electrolyzing process so that power supply is established by the at least two transistor-based converters only. For the purpose of rectifying as such, the thyristor-based converter may have not only thyristors but also diodes, respectively.

Usually, the electrolyzing device requires a high DC current, for instance, in a range of about some kA through about some decades of kA. This clarifies why the power supply device used to be based on thyristors, for instance, a B6C configuration. Such a power supply device is preferable due to its efficiency and its reliability. However, a thyristor-based power supply device is not suited to control sufficiently a value of the reactive current on the AC side, for instance, if capacitive reactive current was required. Especially, starting operating the electrolyzing device as well as shutdown operating the electrolyzing device may be critical. The use of transistor-based converters for the power supply device causes some benefits, however, starting operation as well as shutdown remain critical. It should be noted that the power supply is a key requirement in an entire electrolysis system. One major requirement is to provide safety of the electrolyzing device at any predetermined status of operation.

In this regard, it is an object of the invention to provide methods, power supply devices, as well as an electrolyzing plant, which may further support safe operation of the electrolyzing device.

As a solution, methods, power supply devices, and an electrolyzing plant according to the independent claims are proposed.

Exemplary embodiments can be further derived from the features of the dependent claims.

With regard to the first aspect of a generic method of controlling a starting sequence for a power supply device, it is proposed that the starting sequence comprises activating operating of the thyristor-based converter so that a DC system voltage is provided at the at least one electrolyzing device, in order to allow starting of operation of the at least one electrolyzing device from an off-status, activating operating of the first transistor-based converter by keeping the first DC switch in an open status, wherein the first transistor-based converter is operated in a capacitive reactive power modus such that capacitive reactive power is provided at the AC side of the first transistor-based converter, in order to increase the DC system voltage, activating operating of the second transistor-based converter by keeping the second DC switch in an open status, wherein the second transistor-based converter is operated in an inductive reactive power modus such that inductive reactive power is provided at the AC side of the second transistor-based converter, wherein a second DC voltage is provided at the DC side of the second transistor-based converter, comparing the increased DC system voltage with the second DC voltage, and, dependent on the comparison, switching the second DC switch in a closed status, stopping providing inductive reactive power by the second transistor-based converter, and activating a power supply modus of the second transistor-based converter.

With regard to the second aspect of a generic method of controlling a shutdown sequence for a power supply device, it is proposed that the shutdown sequence comprises, when operating at least the second transistor-based converter in the power supply modus and the second DC switch is in the closed status, reducing power conversion of the second transistor-based converter, and activating operating of the second transistor-based converter in an inductive reactive power modus such that inductive reactive power is provided at the AC side of the second transistor-based converter, activating operating of the thyristor-based converter, activating operating of the first transistor-based converter when the first DC switch in the open status, wherein the first transistor-based converter is operated in a capacitive reactive power modus such that capacitive reactive power is provided at the AC side of the first transistor-based converter, switching the second DC switch in the open status, deactivating operating second transistor-based converter in inductive reactive power modus, and deactivating operating of the first transistor-based converter in the capacitive reactive power modus, in order to achieve the DC system voltage, and operating of the thyristor-based converter in order to provide the DC system voltage.

According to the first aspect, it is especially proposed that the power supply device has a control apparatus configured to control a starting sequence of the power supply device, in order to enable the electrolyzing device to establish an electrolyzing process in response to being supplied with the electric power such that the at least one electrolyzing device is subjected to an electrolyzing voltage and an electrolyzing current, wherein the control apparatus is further configured to provide a starting sequence comprising activating operating of the thyristor-based converter so that a DC system voltage is provided at the output connector, in order to allow starting of operation of the at least one electrolyzing device from an off-status, activating operating of the first transistor-based converter by keeping the first DC switch in an open status, wherein the first transistor-based converter is operated in a capacitive reactive power modus such that capacitive reactive power is provided at the AC side of the first transistor-based converter, in order to increase the DC system voltage, activating operating of the second transistor-based converter by keeping the second DC switch in an open status, wherein the second transistor-based converter is operated in an inductive reactive power modus such that inductive reactive power is provided at the AC side of the second transistor-based converter, wherein a second DC voltage is provided at the DC side of the second transistor-based converter, comparing the increased DC system voltage with the second DC voltage, and, dependent on the comparison, switching the second DC switch in a closed status, stopping providing inductive reactive power by the second transistor-based converter, and activating a power supply modus of the second transistor-based converter.

According to the second aspect, it is especially proposed that the power supply device has a control apparatus configured to control a shutdown sequence of the power supply device, in order to enable shutting down operation of the at least one electrolyzing device from an on-status to an off-status, wherein, during the on-status, the power supply device provides an electrolyzing voltage and an electrolyzing current at the output connector, wherein the control apparatus is further configured to provide the shutdown sequence comprising, when operating at least the second transistor-based converter in the power supply modus and the second DC switch is in the closed status, reducing power conversion of the second transistor-based converter, and activating operating of the second transistor-based converter in an inductive reactive power modus such that inductive reactive power is provided at the AC side of the second transistor-based converter, activating operating of the thyristor-based converter, activating operating of the first transistor-based converter when the first DC switch is in the open status, wherein the first transistor-based converter is operated in a capacitive reactive power modus such that capacitive reactive power is provided at the AC side of the first transistor-based converter, switching the second DC switch in the open status, deactivating operating second transistor-based converter in inductive reactive power modus, and deactivating operating of the first transistor-based converter in the capacitive reactive power modus, in order to achieve the DC system voltage, and operating of the thyristor-based converter in order to provide the DC system voltage.

With regard to a generic electrolyzing plant, it is proposed that the electrolyzing plant has a power supply device according to the invention.

Generally, the invention is at least based on the consideration that the proposed power supply intends to overcome the limitations of conventional IGBT power supply and integrate the benefits of a thyristor-based power supply for the electrolyzation plant, wherein proposing a power supply device architecture and control of an electrolysis system based on a hybrid power supply such as involving an IGBT and a thyristor architecture combined with a new control procedure. The power supply is a key element in the entire electrolyzation plant and one of the main functionalities is to guarantee the safety of the electrolyzation device at any given operation point. The hybrid approach enables the architecture to have specific functionalities during ramp up and during operation with the main focus on standard component utilization and efficiency gains. Among others, the focus is directed to increase the voltage levels of the AC side of the power supply considering all benefits of a high grid voltage as well as taking into account the safe operation during start-up, shutdown, and normal operation under any given status of the electrolyzation device, such as for instance, cold start, warm start, and/or the like.

Moreover, the invention uses the possibility to operate a transistor-based converter such that the electric converter is enabled to provide reactive energy, power, or current, respectively, to the AC side, even if the transistor-based converter does not operate in the power supply modus. In this regard, the DC side of the transistor-based converter can be disconnected from the electrolyzing device, the output connector, or open, respectively. Therefore, the transistor-based converter can be controlled such that, in the reactive power modus, reactive power can be provided at the AC side. It is further possible to control the transistor-based converter to provide capacitive reactive power or inductive reactive power at the AC side. The kind of the reactive power as well as its value can be controlled very flexible and fast.

The transistor-based converter may be controlled such that the power factor is reduced, especially, considerably smaller than 1. In this regard, it is possible to provide a specific predetermined amount of reactive power at its AC side. Especially, the operation of the transistor-based converter may be amended such that the current consumed from the AC voltages may be more phase-shifted with regard to the alternating voltage of the AC power source in order to provide a specific amount of reactive current or reactive power, respectively. It should be noted that, at the same time, the operation of the transistor-based converter is still maintained. It should also be noted that, in the reactive power modus, electric energy of a polarization energy source may be especially used for operating the electric converter in the reactive power modus. This is a substantial advantage with regard to thyristor-based converters, which are usually operable in a very limited rectifying modus only, where the power factor can be affected only in a very limited way by a firing angle, wherein the rectified power is substantially affected at the same time.

One further consideration of the invention is to use a kind of a hybrid power supply having a transistor-based converter such as, for example, an IGBT-based converter, combined in the power supply device with the thyristor-based converter, wherein the thyristor-based converter may provide one of the main functionalities such as ramp up or starting, respectively. Transistor-based converters may provide a boost characteristic which means that they can transfer power from the rectified grid voltage level to an increased voltage level, for example, a DC voltage level of a typical rectification coefficient of a diode rectifier with regard to an Amplitude of the AC voltage. This feature only may be detrimental to an ageing of the electrolyzing device in case the grid voltage is set too high and the rectified grid voltage ends up in the region of a current-voltage curve, where high current spikes are generated by an uncontrolled operation of the backward diodes until the converter starts to smoothly modulate the power transferred by the converter from the AC side to the DC terminals of the electrolyzing device.

Especially, the DC system voltage may have the value of or may be the electrolyzing voltage, especially, during providing the electrolyzing process.

Thyristor-based converters may provide a buck characteristic which means that they may operate at a voltage lower than the rectified grid voltage, for instance, a DC voltage level of a typical rectification coefficient of thyristor based converters with regard to an Amplitude of the AC voltage, and can control the current based on the grid voltage and grid frequency. By combining both operations and concepts into one concept of a hybrid power supply, the safe operation of the electrolyzing device may be met taking also into account the additional benefit of the IGBT-converter to control independently the reactive power so that the DC voltage level between thyristor-based operation and IGBT-based operation meets the ramping requirements of the electrolyzing device. The invention targets a multi-IGBT-based converter architecture arranged in a parallel connection together with the thyristor-based converter, which has the main functionality to be involved in the start-up and shutdown of the power supply.

Especially with regard to the first aspect, the invention proposes a starting sequence for a generic power supply device, wherein at first thyristor-based converter is activated. Usually, the thyristor-based converter may be present, in order to provide a polarization voltage, which is a DC voltage that is too low to allow the electrolyzing device providing the ordinary electrolyzing process, on the one hand, and, on the other hand, is high enough to avoid a fuel cell operation of the electrolyzing device. Especially, the polarization voltage may be used to provide a stable and safe operation of the electrolyzing device beyond the ordinary electrolyzing process. Moreover, the thyristor-based converter may also be used to provide a DC system voltage on the DC side of the thyristor-based converter so that electric capacities on the DC side as well as of the at least one electrolyzing device can be pre-charged. In this regard, the thyristor-based converter may be controlled such to charge the before-mentioned electric capacities to the DC system voltage which, especially, may be the polarization voltage. In this regard, the thyristor-based converter may also be operated as a pre-charge circuitry.

The thyristor-based converter may comprise one or more thyristors only. However, it may also comprise one or more thyristors combined with one or more diodes. A specific common circuitry of a thyristor-based converter may be a B6C-circuitry, which may be used together with a three-phase AC voltage at its AC side.

The polarization voltage may be adjustable so that individual requirements of the at least one electrolyzing device can be sufficiently considered, in order to achieve the before-mentioned conditions with regard to the fuel cell operation or the like. Especially, aging of the electrolyzing cells of the electrolyzing device may be considered.

In this regard, the DC system voltage may be provided at the output connector of the power supply device. As the output connector may be electrically connected with the at least one electrolyzing device, the DC system voltage may be also supplied to the at least one electrolyzing device. During this first step, the first and the second DC switches are in the open status so that the respective DC sides of the first and the second transistor-based converters are disconnected from the output connector.

The transistor-based converters may have a similar, especially, the same design of construction or circuitry, respectively. However, they also may have a differing design or construction.

Especially, the first and the second transistor-based converters may be designed for the same power. They may also be designed for the same or a differing alternating voltage provided at the AC sides. Especially, the transistor-based converter may have a circuit breaker at the AC side in order to allow disconnecting the AC side of the transistor-based converter from being subjected to a respective AC voltage. The transistor-based converter may have transistors as switching elements in order to provide the power conversion. The transistors may be dipolar transistors, especially, insulated-gate-bipolar-transistor (IGBT), field-effect-transistors, especially, metal oxide-field-effect-transistors (MOSFETs) or the like. The transistors may be arranged in bridges, such as a half bridge, a full bridge, or the like, wherein such a bridge may be provided for each phase of the alternating voltage. The transistors may be operated in a switch modus.

At the DC side, the transistor-based converter usually may have a capacitor, a battery and/or the like, in order to provide the first and the second DC voltage, respectively, during operation. The respective DC side of the respective thyristor-based converter may include such energy storage.

The DC switch may be an electronic DC switch and/or an electromechanic DC switch. The operation of converters and the switches may be controlled by a control apparatus. The control apparatus may be a component of the power supply device. However, at least partially, the control apparatus may be a component of the electrolyzing plant.

In the present embodiment according to the first aspect, the control apparatus may control the starting sequence of the supply device, in order to enable the electrolyzing device to provide the ordinary electrolyzing process when the starting sequence is done. In this regard, the at least one electrolyzing device is subjected to the electrolyzing voltage and the electrolyzing current. For this purpose, the control apparatus is configured to provide the starting sequence.

The starting sequence comprises, first, activating operating of the thyristor-based converter so that a DC system voltage is provided at the output connector, in order to allow starting of operation of the at least one electrolyzing device from an off-status. During the off-status, the electrolyzing device does not provide the electrolyzing process. Then, as the DC system voltage is reached or a pre-charge operation is done, operating of the first thyristor-based converter is activated by keeping the first DC switch in the open status. The first transistor-based converter is operated in a capacitive reactive power modus such that capacitive reactive power is provided at the AC side of the first transistor-based converter. Such operation causes an interaction with the thyristor-based converter such that the DC system voltage provided by the thyristor-based converter can be increased. During this step of the starting sequence, the first DC switch remains in the open status. Then, operating of the second transistor-based converter is activated by keeping the second DC switch in the open status. The second transistor-based converter is operated in an inductive reactive power modus such that inductive reactive power is provided at the AC side of the second transistor-based converter. As the AC sides of the first and the second transistor-based converters are coupled with the AC power source, interaction is provided so that operation of the thyristor-based converter can be further enhanced so that the DC system voltage can be further increased.

At the same time, the second transistor-based converter provides a second DC voltage at its DC side. The control apparatus causes comparing of the increased DC system voltage with the second DC voltage, and, dependent on the comparison, the second DC switch is switched in the closed status. Especially, switching in the closed status is affected when the increased DC system voltage and the second DC voltage are substantially equal. In this regard, the second transistor-based converter can then overtake energy supply of the at least one electrolyzing device. The inductive reactive power production of the second transistor-based converter is stopped so that the second transistor-based converter activates its power supply modus.

In this regard, power supply by the thyristor-based converter stops without providing any further steps. Therefore, it is not necessary to have switches for disconnecting the thyristor-based converter.

With regard to the second aspect, the control apparatus is configured to control a shutdown sequence of the power supply device, in order to enable shutting down operation of the at least one electrolyzing device from an on-status to an off-status. In the on-status, the at least one electrolyzing device provides its ordinary electrolyzing process. The shutdown sequence preferably comprises, when operating at least the second transistor-based converter in the power supply modus and the second DC switch is in the closed status, reducing power conversion of the second transistor-based converter, and activating operating of the second transistor-based converter in an inductive reactive power modus such that inductive reactive power is provided at the AC side of the second transistor-based converter. Then, operating of the thyristor-based converter is activated. Also, operating of the first transistor-based converter is activated, wherein the first DC switch is in the open status. The first transistor-based converter is operated in a capacitive reactive power modus such that the capacitive reactive power is provided at the AC side of the first transistor-based converter. A corresponding interaction as described above is provided.

The second DC switch is then switched in the open status. Switching may be provided such that the electrolyzing voltage corresponds to the DC system voltage that can be provided by the second transistor-based converter. In this regard, a great voltage drop may be avoided. Then, operating of the second transistor-based converter in the inductive reactive power modus is deactivated and, then, operating of the first transistor-based converter in the capacitive reactive power modus is also deactivated so that operation of the transistor-based converter reduces the increased DC system voltage to the ordinary DC system voltage that can be provided by operation of the transistor-based converter only.

Although the above description regarding the invention is based on two transistor-based converters, the invention is not limited to have only two transistor-based converters. There may be plural transistor-based converters, wherein, according to exemplary embodiments, the first and/or second transistor-based converter may be provided by parallel operation of two or more of the plural transistor-based converters. The inventive concept will not be affected as should be clear for those skilled in the art.

With regard to the first aspect, it is additionally proposed that, when the second DC switch has closed, providing capacitive reactive power by the first transistor-based converter is stopped. In this regard, the first transistor-based converter is now free to operate in the power supply modus, too, such as the second transistor-based converter. For this purpose, the first DC switch may be switched in the closed status, in order to provide an electrical connection between the DC side of the first transistor-based converter and the output connector. Therefore, both transistor-based converters may contribute to energy supply or power supply, respectively, for the at least one electrolyzing device.

Moreover, in this regard, it is proposed to activate operating of the first transistor-based converter in the power supply modus, in order to provide a first DC voltage at the DC side of the first transistor-based converter, wherein comparing the second DC voltage with the first DC voltage is provided, and, dependent on the comparison, the first DC switch is switched in the closed status. In this regard, the first transistor-based converter may at least partially contribute to the energy supply or power supply, respectively, for the at least one electrolyzing device.

Moreover, according to a further exemplary embodiment, it is proposed that the DC system voltage is a polarization voltage of the at least one electrolyzing device. In this regard, a safe operation during the start-up and the shutdown of the electrolyzing plant can be achieved.

Moreover, according to another exemplary embodiment, it is proposed that the first and the second AC voltage of the AC power source are provided by a transformer having a primary winding receiving electric power from the AC power source and at least two secondary windings, which are electrically insulated from each other, wherein a first one of the secondary windings provides the first AC voltage and a second one of the secondary windings provides the second AC voltage. This provides an easy construction to allow interaction between the AC sides of the converters during start-up and shutdown of the electrolyzing plant.

In this regard, the power supply device especially may comprise a transformer having a primary winding and at least two secondary windings, wherein the transformer is configured to be connected with the AC power source, wherein a first secondary winding is configured to provide the first AC voltage and is connected with the AC sides of the thyristor-based converter and the first transistor-based converter, and wherein a second secondary winding is configured to provide the second AC voltage and is connected with the AC side of the second transistor-based converter. Especially, the transformer has individual secondary windings for each of plural thyristor-based converters.

The method can be provided by the control apparatus. The control apparatus can be a separate component of the electrolyzing plant. However, it can be at least partially included by a control device of the electrolyzing plant.

Generally, effects that can be achieved by the inventive method may also be achieved by the inventive power supply device and the inventive electrolyzing plant. In this regard, method features can be reworded into apparatus features and vice versa.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Independent of the grammatical term usage, individuals with male, female or other gender identities are included within the term.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
FIG 1 a schematic block circuitry of an electrolyzing plant having a power supply device and an electrolyzing device;
FIG 2 a schematic voltage-current-diagram showing a first portion of a start-up of the electrolyzing plant according to FIG 1;
FIG 3 a schematic voltage-current-diagram showing a second portion of the start-up of the electrolyzing plant according to FIG 1;
FIG 4 a schematic voltage-current-diagram showing a first portion of a shutdown of the electrolyzing plant according to FIG 1; and
FIG 5 a schematic voltage-current-diagram showing a second portion of the shutdown of the electrolyzing plant according to FIG 1

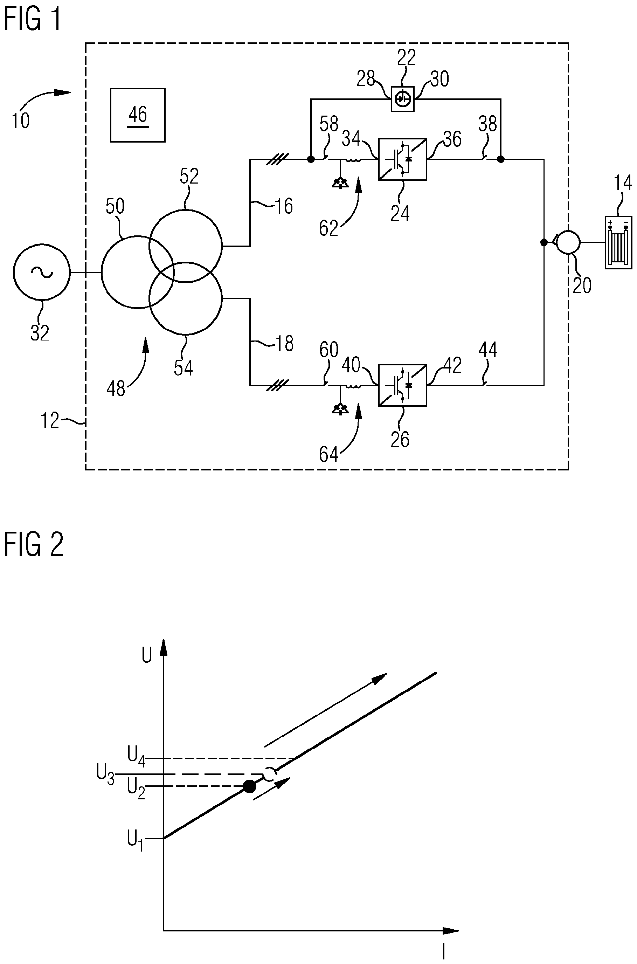

FIG 1 shows a schematic block diagram of a circuitry of an electrolyzing plant 10 having a power supply device 12 and an electrolyzing device 14. The power supply device 12 is configured to supply the electrolyzing device 14 with electric power provided by an AC power source 32. In the present embodiment, only one electrolyzing device 14 is shown. However, the electrolyzing plant 10 may have more than only one electrolyzing device 14. If more than only one electrolyzing device 14 are provided, they may be connected electrically with each other at least partially in parallel or in series. In the present embodiment, the power supply device 12 has an output connector 20, which is configured to be connected with the electrolyzing device 14. In the present embodiment, the output connector 20 is directly coupled with the electrolyzing device 14.

The power supply device 12 also comprises a thyristor-based converter 22 having an AC side 28 and a DC side 30. The AC side 28 of the thyristor-based converter 22 is configured to be connected with a first AC voltage 16 providing electric power of an AC power source 32. The DC side 30 of the thyristor-based converter 22 is connected with the output connector 20.

Moreover, the power supply device 12 comprises a first transistor-based converter 24 operating in self-commutation and having an AC side 34 and a DC side 36. The AC side 34 of the first transistor-based converter 24 is configured to be connected with the first AC voltage 16. The DC side 36 of the first transistor-based converter 24 is connected with the output connector 20 via a first DC switch 38.

The power supply device 12 also comprises a second transistor-based converter 26 operating in self-commutation and having an AC side 40 and a DC side 42. The AC side 40 of the second transistor-based converter 26 is configured to be connected with a second AC voltage 18 providing electric power of the AC power source 32. The DC side 42 of the second transistor-based converter 26 is connected with the output connector 20 via a second DC switch 44.

As can be seen from FIG 1, the DC sides 30, 36, 42 of the converters 22, 24, 26 are connected in parallel with the output connector 20.

The power supply device 12 further comprises a control apparatus 46, which is in communication with the converters 22, 24, 26 as well as the DC switches 38, 44. The control apparatus 46 comprises in this embodiment a programmable computer, which controls operation of the complete power supply device 12, especially, the converters and the switches. The control apparatus 46 may be in communication with an electrolyzing control apparatus of the electrolyzing plant 10, which is configured to control operation of the electrolyzing device 14, as well as further components of the electrolyzing plant 10 being necessary, in order to establish an ordinary electrolyzing process by the electrolyzing device 14.

As can be also seen from FIG 1, the power supply device 12 further comprises a transformer 48 having a primary winding 50 and two secondary windings 52, 54, wherein the windings 50, 52, 54 are electrically insulated from each other. In this embodiment, the primary winding 50 is connected with the AC power source 32, which is in the present embodiment a public grid. The AC power source 32 provides a three phase alternating voltage. The transformer 48 is correspondingly designed. Therefore, the primary winding 50 as well as the secondary windings 52, 54 correspond to respective three phase windings. Insofar, it should be noted that the AC sides 28, 34, 40 of the converters 22, 24, 26 are configured to be subjected to a respective three phase alternating voltage.

As can be further derived from FIG 1, the secondary winding 52 is directly connected with the AC side 28 of the thyristor-based converter 22. In the present embodiment, the secondary winding 52 is further coupled with the AC side 34 of the first transistor-based converter 24 via a circuit breaker 58. Insofar, the thyristor-based converter 22 and the transistor-based converter 24 are connected with the same first AC voltage 16. Between the circuit breaker 58 and the AC side 34, there is additionally connected a filter device 62 which provides several filtering characteristics, in order to conform to network requirements of the AC power source 32.

As can be further derived from FIG 1, the AC side 40 of the second transistor-based converter 26 is connected with the secondary winding 54 via circuit breaker 60. Moreover, between the circuit breaker 60 and the AC side 40, a filter device 64 is connected which is similar to the filter device 62. In this embodiment, the circuit breakers 58, 60 are controlled by the control apparatus 46, too.

According to a first aspect, the control apparatus 46 is configured to control a starting sequence of the power supply device 12, in order to enable the electrolyzing device 14 to establish the electrolyzing process in response to being supplied with the electric power such that the electrolyzing device 14 is subjected to an electrolyzing voltage and an electrolyzing current. The control apparatus 46 is configured to provide the starting sequence as follows:
The starting sequence starts when the electrolyzing device 14 is deactivated that is that the electrolyzing device 14 does not provide its ordinary electrolyzing process. First, the control apparatus 46 activates operating of thyristor-based converter 22 so that a DC system voltage U (FIG 2) is provided at the output connector 20 and, in response thereto, provided for the electrolyzing device 14. This allows starting of operation of the electrolyzing device 14 from an off-status. A first portion of the starting sequence is shown in the schematic diagram of FIG 2 wherein an abscissa is allocated to the electric current, namely the electrolyzing current, and the ordinate is allocated to the voltage, namely, the electrolyzing voltage which may comprise the DC system voltage. As can be seen from FIG 2, operation of the thyristor-based converter 22 causes the electrolyzing voltage rising from 0 or a value U₁ to a value of U₂. The voltage U₁ corresponds to a polarization voltage, which shall not be undercut. The function of the polarization voltage is known to those skilled in the art, which is why it is refrained from providing further details.

As can be seen from FIG 2, operation of the thyristor-based converter 22 leads to rising the electrolyzing voltage to a DC system voltage U₂. Therefore, the operation of the thyristor-based converter 22 only leads to a respective DC voltage at the output connector 20.

When the DC system voltage U₂ is achieved, the control apparatus 46 causes activating operating of the first transistor-based converter 24 by keeping the first DC switch 38 in the open status but switching the circuit breaker 58 in the closed status. This means that the AC side 34 of the first transistor-based converter 24 is connected with the secondary winding 52 so that the AC side 34 is subjected to the first AC voltage 16, too. The first transistor-based converter 24 is operated in a capacitive reactive power modus such that capacitive reactive power is provided at the AC side 34 of the first transistor-based converter 24, in order to increase the DC system voltage U₂ to the increased DC system voltage U₃. For this purpose, activating includes closing the circuit breaker 58. At this stage of the starting sequence, the second transistor-based converter 26 is still deactivated. Therefore, the circuit breaker 60 as well as the DC switch 44 are in the open status.

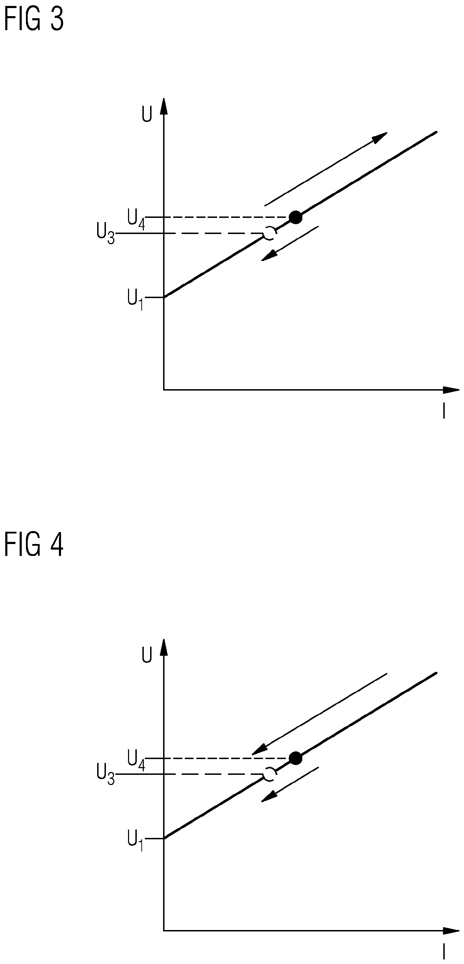

Next, the control apparatus 46 causes activating operating of the second transistor-based converter 26 by keeping the second DC switch 44 in the open status. However, the circuit breaker 64 is switched in the closed status. This means that the AC side 40 of the second transistor-based converter 26 is connected with the secondary winding 54 so that the AC side 40 is subjected to the second AC voltage 18. The second transistor-based converter 26 then operates in an inductive reactive power modus such that inductive reactive power is provided at the AC side 40 of the second transistor-based converter 26. At the same time, a second DC voltage is provided at the DC side 42 of the second transistor-based converter 26. FIG 3 shows the second portion of the effect of the starting sequence. As can be seen from FIG 3, which is a diagram such as FIG 2, this operation allows further increasing the electrolyzing voltage from the increased DC system voltage U₃ to an operation voltage U₄.

Next, the increased DC system voltage U₃ is compared with the second DC voltage by the control apparatus 46. For this purpose, the control apparatus 46 is connected with corresponding voltage sensors not shown in the figures. Dependent on the comparison, the second DC switch 44 is switched in the closed status, inductive reactive power production by the second transistor-based converter 26 is stopped, and a power supply modus of the second transistor-based converter 26 is activated as can be derived from FIG 3. At his stage, the starting sequence may be completed.

However, according to a further exemplary embodiment, when the second DC switch 44 has closed, the control apparatus 46 causes stopping providing capacitive reactive power by the first transistor-based converter 24. Moreover, operating of the first transistor-based converter 24 in the power supply modus is activated, in order to provide a first DC voltage at the DC side 36 of the first transistor-based converter 24. The second DC voltage is compared with the first DC voltage and, depending on the comparison, the first DC switch 38 is switched in the closed status. In this embodiment, both transistor-based converters 24, 26 contribute to the energy supply of the electrolyzing device 14. The electrolyzing device 14 is provided with a perspective electrolyzing voltage and a respective electrolyzing current so that the ordinary electrolyzing process can be provided.

According to yet another exemplary embodiment, especially with regard to the second aspect, based on the electrolyzing plant 10 according to FIG 1, the control apparatus 46 is configured to control a shutdown sequence of the power supply device 12, in order to enable shutting down operation of the electrolyzing device 14 from an on-status to an off-status, in which the electrolyzing device 14 does not operate anymore in the ordinary electrolyzing process. During the on-status, the power supply device 12 provides the electrolyzing voltage and the electrolyzing current at the output connector 20. The control apparatus 46 is configured to provide the shutdown sequence as follows:
When operating at least the second transistor-based converter 26 in the power supply modus and the second DC switch 44 is in the closed status, the control apparatus 46 causes reducing power conversion of the second transistor-based converter 26, and activates operating of the second transistor-based converter 26 in the inductive reactive power modus such that inductive reactive power is provided at the AC side 40 of the second transistor-based converter 26. As can be seen from FIG 4, showing a diagram such as FIG 3, the electrolyzing voltage reduces from the operation voltage U₄ to the increased DC system voltage U₃. Then, the control apparatus 46 causes activating operating of the thyristor-based converter 22. Also, the control apparatus 46 causes activating operating of the first transistor-based converter 24, when the first DC switch 38 is in the open status. The first transistor-based converter 24 is operated in the capacitive reactive power modus such that capacitive reactive power is provided at the AC side 34 of the first transistor-based converter 24. Next, the control apparatus 46 causes switching the second DC switch 44 in the open status. Next, operating of the second transistor-based converter 26 in inductive reactive power modus is deactivated.

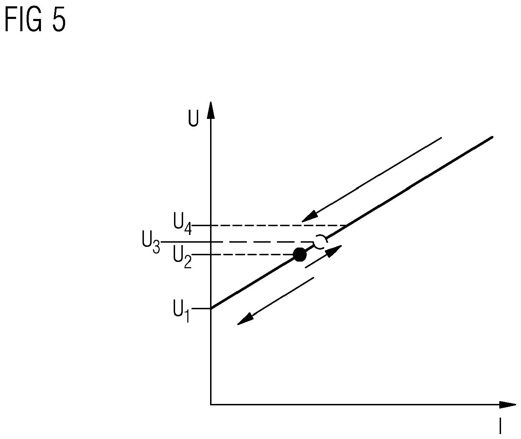

FIG 5 shows in a diagram such as FIG 4 reduction of the increased DC system voltage U₃ to the DC system voltage U₂ caused by respectively operating the first transistor-based converter 24. Then, when the DC system voltage U₂ is achieved, operating of the first transistor-based converter 24 in the capacitive reactive power modus is deactivated. Then, the control apparatus 46 causes operating of the thyristor-based converter 22, in order to provide the DC system voltage U₂ which may be reduced to the polarization voltage U₃ by respective control of the thyristor-based converter 22.

After a predetermined period of time, operation of the thyristor-based converter 22 can be deactivated. The predetermined period of time may be depend on residual components in the electrolyzing device 14, especially its electrolyzing cells, being removed.

According to another exemplary embodiment, based on the before-mentioned embodiment related to the second aspect, it can be provided that, when operating the first thyristor-based converter 22 in the power supply modus together with the second transistor-based converter 26 and the first DC switch 38 is in the closed status, the power supply modus of the first transistor-based converter 24 may be finished and the first DC switch 38 is switched in the open status. This may be provided before the first transistor-based converter 24 is used to provide capacitive reactive power.

The detailed description of the embodiments above shall only be regarded to further explain the invention and not be used to limit the scope of the invention.

## Claims

1. A method of controlling a starting sequence for a power supply device (12) configured to supply at least one electrolyzing device (14) with electric power, in order to enable the electrolyzing device (14) to establish an electrolyzing process in response to being supplied with the electric power such that the at least one electrolyzing device (14) is subjected to an electrolyzing voltage and an electrolyzing current, wherein the power supply device (12) has a thyristor-based converter (22) having an AC side (28) and a DC side (30), wherein the AC side (28) of the thyristor-based converter (22) is connected with a first AC voltage (16) providing electric power of an AC power source (32), and wherein the DC side (30) of the thyristor-based converter (22) is connected with the at least one electrolyzing device (14), a first transistor-based converter (24) operating in self-commutation and having an AC side (34) and a DC side (36), wherein the AC side (34) of the first transistor-based converter (24) is connected with the first AC voltage (16), and the DC side (36) of the first transistor-based converter (24) is connected with the at least one electrolyzing device (14) via a first DC switch (38), and a second transistor-based converter (26) operating in self-commutation and having an AC side (40) and a DC side (42), wherein the AC side (40) of the second transistor-based converter (26) is connected with a second AC voltage (18) providing electric power of the AC power source (32), and the DC side (42) of the second transistor-based converter (26) is connected with the at least one electrolyzing device (14) via a second DC switch (44), wherein the starting sequence comprises:
- activating operating of the thyristor-based converter (22) so that a DC system voltage (U) is provided at the at least one electrolyzing device (14), in order to allow starting of operation of the at least one electrolyzing device (14) from an off-status,
- activating operating of the first transistor-based converter (24) by keeping the first DC switch (38) in an open status, wherein the first transistor-based converter (24) is operated in a capacitive reactive power modus such that capacitive reactive power is provided at the AC side (34) of the first transistor-based converter (24), in order to increase the DC system voltage (U),
- activating operating of the second transistor-based converter (26) by keeping the second DC switch (44) in an open status, wherein the second transistor-based converter (26) is operated in an inductive reactive power modus such that inductive reactive power is provided at the AC side (40) of the second transistor-based converter (26), wherein a second DC voltage is provided at the DC side (42) of the second transistor-based converter (26),
- comparing the increased DC system voltage (U) with the second DC voltage, and, dependent on the comparison, switching the second DC switch (44) in a closed status, stopping providing inductive reactive power by the second transistor-based converter (26), and activating a power supply modus of the second transistor-based converter (26).

2. The method according to claim 1, further comprising:
- when the second DC switch (44) has closed, stopping providing capacitive reactive power by the first transistor-based converter (24).

3. The method according to claim 2, further comprising:
- activating operating of the first transistor-based converter (24) in the power supply modus in order to provide a first DC voltage at the DC side (36) of the first transistor-based converter (24),
- comparing the second DC voltage with the first DC voltage, and,
- dependent on the comparison, switching the first DC switch (38) in the closed status.

4. A method of controlling a shutdown sequence for a power supply device (12) configured to supply at least one electrolyzing device (14) with electric power, in order to enable shutting down operation of the at least one electrolyzing device (14) from an on-status to an off-status, wherein, during the on-status, the at least one electrolyzing device (14) is subjected to an electrolyzing voltage and an electrolyzing current provided by the power supply device (12), wherein the power supply device (12) has a thyristor-based converter (22) having an AC side (28) and a DC side (30), wherein the AC side (28) of the thyristor-based converter (22) is connected with a first AC voltage (16) providing electric power of an AC power source (32), and wherein the DC side (30) of the thyristor-based converter (22) is connected with the at least one electrolyzing device (14), a first transistor-based converter (24) operating in self-commutation and having an AC side (34) and a DC side (36), wherein the AC side (34) of the first transistor-based converter (24) is connected with the first AC voltage (16), and the DC side (30) of the first transistor-based converter (24) is connected with the at least one electrolyzing device (14) via a first DC switch (38), and a second transistor-based converter (26) operating in self-commutation and having an AC side (40) and a DC side (42), wherein the AC side (40) of the second transistor-based converter (26) is connected with a second AC voltage (18) providing electric power of the AC power source (32), and the DC side (42) of the second transistor-based converter (26) is connected with the at least one electrolyzing device (14) via a second DC switch (44), wherein, in the on-status, at least the second DC switch (44) is in a closed status and at least the second transistor-based converter (26) operates in a power supply modus, in order to provide electric power to the at least one electrolyzing device (14), and the thyristor-based converter (22) is deactivated, wherein the shutdown sequence comprises:
- when operating at least the second transistor-based converter (26) in the power supply modus and the second DC switch (44) is in the closed status, reducing power conversion of the second transistor-based converter (26), and activating operating of the second transistor-based converter (26) in an inductive reactive power modus such that inductive reactive power is provided at the AC side (40) of the second transistor-based converter (26),
- activating operating of the thyristor-based converter (22),
- activating operating of the first transistor-based converter (24) when the first DC switch (38) in the open status, wherein the first transistor-based converter (24) is operated in a capacitive reactive power modus such that capacitive reactive power is provided at the AC side (28) of the first transistor-based converter (24),
- switching the second DC switch (44) in the open status,
- deactivating operating second transistor-based converter (26) in inductive reactive power modus, and
- deactivating operating of the first transistor-based converter (24) in the capacitive reactive power modus, in order to achieve the DC system voltage (U), and
- operating of the thyristor-based converter (22) in order to provide the DC system voltage (U).

5. The method according to claim 4, further comprising:
- deactivating operating of the thyristor-based converter (22) after a predetermined period of time.

6. The method according to claim 4 or 5, further comprising:
- when operating the first transistor-based converter (22) in the power supply modus together with the first transistor-based converter (26) and the first DC switch (28) is in the closed status, finishing the power supply modus of the first transistor-based converter (26), and switching the first DC switch (38) in an open status.

7. The method according to anyone of the preceding claims, wherein the DC system voltage (U) is a polarization voltage of the at least one electrolyzing device.

8. The method according to anyone of the preceding claims, wherein the first and the second AC voltage (16, 18) of the AC power source (32) are provided by a transformer (48) having a primary winding (50) receiving electric power from the AC power source (32) and at least two secondary windings (52, 54) which are electrically insulated from each other, wherein a first one of the secondary windings (52) provides the first AC voltage (16) and a second one of the secondary windings (54) provides the second AC voltage (18).

9. A power supply device (12) configured to supply at least one electrolyzing device (14) with electric power, the power supply device (12) having
- an output connector (20) configured to be connected with the at least one electrolyzing device (14),
- a thyristor-based converter (22) having an AC side (28) and a DC side (30), wherein the AC side (28) of the thyristor-based converter (22) is configured to be connected with a first AC voltage (16) providing electric power of an AC power source (32), and wherein the DC side (30) of the thyristor-based converter (22) is connected with the output connector (20),
- a first transistor-based converter (24) operating in self-commutation and having an AC side (34) and a DC side (36), wherein the AC side (34) of the first transistor-based converter is configured to be connected with the first AC voltage, and the DC side (36) of the first transistor-based converter (24) is connected with the output connector (20) via a first DC switch (38),
- a second transistor-based converter (26) operating in self-commutation and having an AC side (40) and a DC side (42), wherein the AC side (40) of the second transistor-based converter (26) is configured to be connected with a second AC voltage (18) providing electric power of the AC power source (32), and the DC side (42) of the second transistor-based converter (26) is connected with the output connector (20) via a second DC switch (44), and
- a control apparatus (46) configured to control a starting sequence of the power supply device (12), in order to enable the electrolyzing device (14) to establish an electrolyzing process in response to being supplied with the electric power such that the at least one electrolyzing device (14) is subjected to an electrolyzing voltage and an electrolyzing current, wherein the control apparatus (46) is further configured to provide a starting sequence comprising:
- activating operating of the thyristor-based converter (22) so that a DC system voltage (U) is provided at the output connector (2), in order to allow starting of operation of the at least one electrolyzing device (14) from an off-status,
- activating operating of the first transistor-based converter (24) by keeping the first DC switch (38) in an open status, wherein the first transistor-based converter (24) is operated in a capacitive reactive power modus such that capacitive reactive power is provided at the AC side (34) of the first transistor-based converter (24), in order to increase the DC system voltage (U),
- activating operating of the second transistor-based converter (26) by keeping the second DC switch (44) in an open status, wherein the second transistor-based converter (26) is operated in an inductive reactive power modus such that inductive reactive power is provided at the AC side (40) of the second transistor-based converter (26), wherein a second DC voltage is provided at the DC side (42) of the second transistor-based converter (26),
- comparing the increased DC system voltage (U) with the second DC voltage, and, dependent on the comparison, switching the second DC switch (44) in a closed status, stopping providing inductive reactive power by the second transistor-based converter (26), and activating a power supply modus of the second transistor-based converter (26).

10. A power supply device (12) configured to supply at least one electrolyzing device (14) with electric power, the power supply device (12) having
- an output connector (20) configured to be connected with the at least one electrolyzing device (14),
- a thyristor-based converter (22) having an AC side (28) and a DC side (30), wherein the AC side (28) of the thyristor-based converter (22) is configured to be connected with a first AC voltage (16) providing electric power of an AC power source (32), and wherein the DC side (30) of the thyristor-based converter (22) is connected with the output connector (20),
- a first transistor-based converter (24) operating in self-commutation and having an AC side (34) and a DC side (36), wherein the AC side (34) of the first transistor-based converter is configured to be connected with the first AC voltage, and the DC side (36) of the first transistor-based converter (24) is connected with the output connector (20) via a first DC switch (38),
- a second transistor-based converter (26) operating in self-commutation and having an AC side (40) and a DC side (42), wherein the AC side (40) of the second transistor-based converter (26) is configured to be connected with a second AC voltage (18) providing electric power of the AC power source (32), and the DC side (42) of the second transistor-based converter (26) is connected with the output connector (20) via a second DC switch (44), and
- a control apparatus (46) configured to control a shutdown sequence of the power supply device (12), in order to enable shutting down operation of the at least one electrolyzing device (14) from an on-status to an off-status, wherein, during the on-status, the power supply device (12) provides an electrolyzing voltage and an electrolyzing current at the output connector (20), wherein the control apparatus (46) is further configured to provide the shutdown sequence comprising:
- when operating at least the second transistor-based converter (26) in the power supply modus and the second DC switch (44) is in the closed status, reducing power conversion of the second transistor-based converter (26), and activating operating of the second transistor-based converter (26) in an inductive reactive power modus such that inductive reactive power is provided at the AC side (40) of the second transistor-based converter (26),
- activating operating of the thyristor-based converter (22),
- activating operating of the first transistor-based converter (24) when the first DC switch (38) is in the open status, wherein the first transistor-based converter (24) is operated in a capacitive reactive power modus such that capacitive reactive power is provided at the AC side (34) of the first transistor-based converter (24),
- switching the second DC switch (44) in the open status,
- deactivating operating of the second transistor-based converter (26) in the inductive reactive power modus, and
- deactivating operating of the first transistor-based converter (24) in the capacitive reactive power modus, in order to achieve the DC system voltage (U), and
- operating of the thyristor-based converter (22) in order to provide the DC system voltage (U).

11. The power supply device according to claim 9 or 10, comprising a transformer (48) having a primary winding (50) and at least two secondary windings (52, 54), wherein the transformer (48) is configured to be connected with the AC power source (32), wherein a first secondary winding (52) is configured to provide the first AC voltage (16) and is connected with the AC sides (28, 34) of the thyristor-based converter (22) and the first transistor-based converter (24), and wherein a second secondary winding (54) is configured to provide the second AC voltage (18) and is connected with the AC side (40) of the second transistor-based converter (26).

12. An electrolyzing plant (10) having at least one electrolyzing device (14), and a power supply device (12) configured to be connected with an AC power source (32), wherein the power supply device (12) has an output connector (20) connected with the at least one electrolyzing device (12),
**characterized in that**
the power supply device (12) is designed according to anyone of the claims 9 through 11.
